# EUROPEAN PATENT SPECIFICATION

(11) **EP 4 299 938 B1**
(45) Date of publication and mention of the grant of the patent: **28.10.2026**
(21) Application number: 22781685.7
(22) Date of filing: 01.04.2022
(51) Int. Cl.: F16D 3/84, F16D 3/223, F16J 3/04

(54) **GREASE SEALING STRUCTURE OF CONSTANT VELOCITY JOINT OF VEHICLE, AND CONSTANT VELOCITY JOINT INCLUDING SAME**
SCHMIERFETTDICHTUNGSSTRUKTUR EINES GLEICHLAUFGELENKS EINES FAHRZEUGS UND GLEICHLAUFGELENK DAMIT
STRUCTURE D'ÉTANCHÉITÉ À LA GRAISSE D'UN JOINT HOMOCINÉTIQUE DE VÉHICULE, ET JOINT HOMOCINÉTIQUE LA COMPRENANT

(30) Priority: 02.04.2021 KR 20210043465
(43) Date of publication of application: 03.01.2024
(73) Proprietor: Hansae Mobility Co., Ltd., Daegu 42981 (KR)
(72) Inventor: JANG, Dal Soo, Dalseong-Gun Daegu 42981 (KR); SEO, Jong Uk, Dalseong-Gun Daegu 42981 (KR)
(74) Representative: Manitz Finsterwald Patent- und Rechtsanwaltspartnerschaft mbB
(86) International application number: PCT/KR2022/004685
(87) International publication number: WO 2022/211566

(56) References cited:
- DE-A1- 2 605 458
- JP-A- 2004 060 770
- JP-A- 2007 155 098
- JP-A- 2009 228 728
- JP-A- 2009 228 728
- JP-B2- 5 818 390
- KR-B1- 102 375 738
- US-A- 5 230 660
- US-A1- 2007 173 337
- US-A1- 2008 194 344
- US-A1- 2010 285 891
- US-A1- 2010 285 891
- US-B2- 10 274 020

## Description

### [Technical Field]

The present invention relates to a constant velocity joint used for transmitting driving force of a vehicle, and more specifically, to a grease sealing structure for sealing grease of a constant velocity joint.

### [Background Art]

A constant velocity joint is a device that transmits rotational driving force and is used as a device to transmit rotational driving force by being incorporated to a drive shaft, a propeller shaft, and the like for vehicles.

A constant velocity joint like a Rzeppa joint includes an outer race, an inner race, a plurality of balls disposed between the outer and inner races, and a ball cage that accommodates the balls. In such a constant velocity joint, the outer race typically has an open side, and the balls, the ball cage, and the inner race are inserted through this open side. A space between the outer race and the inner race where the balls and the ball cage are disposed is filled with grease for lubrication. To seal the grease, a boot is typically attached to both the outer and inner races. Generally, the boot is secured to both the outer and inner races using a crimping method with clamps. A clamp that presses and secures one side of the boot onto the radial outer surface of the outer race, and another clamp that does the same on the radial outer surface of the inner race, are commonly used. The boot is subject to continuous shape deformation and loads, so it requires excellent durability to maintain grease sealing. Because the boot is fixed to the radial outer surface of the outer race, there is an increased rotational radius, leading to a significant problem of potential radial expansion of the boot.

In particular, when the constant velocity joint is applied to the propeller shaft, it rotates at very high speeds, for instance, between 6,000 RPM and 8,000 RPM, and thus it is difficult to maintain grease sealing using the conventional widely-used crimping method using clamps. Not only does the propeller shaft rotate at approximately three times the rotational speed compared to the drive shaft typically used in front or rear wheels, but it also has a large rotational radius, leading to a significant potential for radial expansion. Hence, when applying the conventional sealing structure to the constant velocity joints used in propeller shafts, there are issues with boot damage and grease leakage.

### <Prior Documents>

- U.S. patent No. US8,313,107 (2012.11.20.)
- U.S. patent No. US9,494,199 (2016.11.15.)

US 2010/285891 A1 discloses direct torque flow constant velocity joint connector includes an outer joint part, and inner joint part, a cage and a plurality of balls. The outer joint part includes outer ball tracks. The inner joint part includes inner ball tracks and a rotational axis, wherein the inner joint part has a face spline oriented about the rotational axis. The plurality of balls is provided in the cage and engage the inner and outer ball tracks of the respective inner and outer joint parts, thereby allowing torque transmission by way of the face splines. The constant velocity joint includes a grease sealing structure comprising a boot and a clamping cap. Other constant velocity joints of the above type are disclosed in US 10274020 B2, US 5230660 A, DE 2605458 A1, US 2007/173337 A, JP 2009228728 A and US 2008/194344 A1.

### [Detailed Description of the Invention]

### [Technical Object]

An object of the present invention is to provide a grease sealing structure for a constant velocity joint that can effectively prevent boot damage and grease leakage, even when applied to a constant velocity joint that rotates at high speeds and have a large rotational radius.

### [Technical Solutions]

The object is satisfied by a grease sealing structure in accordance with claim 1. A grease sealing structure according to an embodiment of the present invention provides sealing grease filled between an outer race and an inner race of a constant velocity joint and includes: a boot formed to be closely fitted and supported on both the outer race and the inner race; a clamping cap configured to be fastened to the outer race so that a movement in an axial direction of the outer race is limited and to press the boot in the axial direction of the outer race to ensure the boot to be tightly fitted to the outer race; and a sealing ring configured to be fastened to the boot to press the boot against an outer circumferential surface of the inner race.

The boot includes a first fixing part configured to be fastened to the outer race, a second fixing part configured to be fastened to the inner race, and a connecting part connecting the first fixing part and the second fixing part. The first fixing part may be supported on the outer race in the axial direction by the clamping cap, and the second fixing part may be configured to be supported on the inner race in a radial direction by the sealing ring.

The clamping cap includes a fastening part that is fastened to the outer race so that a movement in the axial direction is restricted, and a support part extending radially from one end of the fixing part to press the first fixing part in the axial direction.

The clamping cap may further include a movement limiting part that is bent radially inward from one end of the fastening part to restrict movement in the axial direction.

The clamping cap further includes an expansion limiting part that extends in the axial direction from an inner end of the support part and is formed to be positioned radially outward from the connecting part of the boot.

The connecting part of the boot includes an axial extension part that extends in the axial direction from a radial inner end of the first fixing part, and a corrugated part with a corrugated shape connecting the axial extension part and the second fixing part, and the expansion limiting part may be configured to surround an outer side of the axial extension part.

The expansion limiting part is configured to be spaced apart from an outer surface of the axial extension part when the outer race and the inner race are while being a state of not angularly displaced from each other.

The expansion limiting part may be configured so that a distance separated from an outer surface of the axial extension part along the axial direction remains constant.

The expansion limiting part may be configured so that the distance separated from the outer surface of the axial extension part along the axial direction gradually increases or decreases.

A constant velocity joint according to an embodiment of the present invention includes: an outer race forming a plurality of outer ball grooves; an inner race forming a plurality of inner ball grooves that are respectively paired with the outer ball grooves; a plurality of balls that are respectively positioned in a space formed by the pair of the outer and internal ball grooves; a ball cage accommodating the plurality of balls; and a grease sealing structure as described above.

A groove may be formed on a support surface of the outer race where the first fixing part is supported, and the first fixing part may be provided with a sealing protrusion that is inserted into the groove.

A groove may be formed on a support surface of the inner race where the second fixing part is supported, in a position corresponding to the sealing ring.

### [Effects of the Invention]

According to the invention, since a boot is pressurized in an axial direction of an outer race to be fixed by a clamping cap attached to an outer race, the rotation radius of the boot can be minimized, and excessive expansion of the boot can be prevented.

### [Brief Description of Drawings]

FIG. 1 is a front view of a constant velocity joint with a grease sealing structure according to an embodiment of the invention.
FIG. 2 is an exploded perspective view of a constant velocity joint with a grease sealing structure according to an embodiment of the invention.
FIG. 3 is a cross-sectional view taken along a line III-III of FIG. 1.
FIG. 4 is an enlarged view of a portion of FIG. 3.

### [Embodiments for carrying out the Invention]

In the following, detailed descriptions of embodiments of the present invention will be given with reference to the attached drawings.

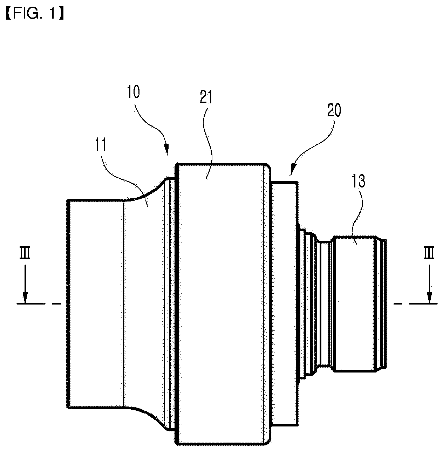

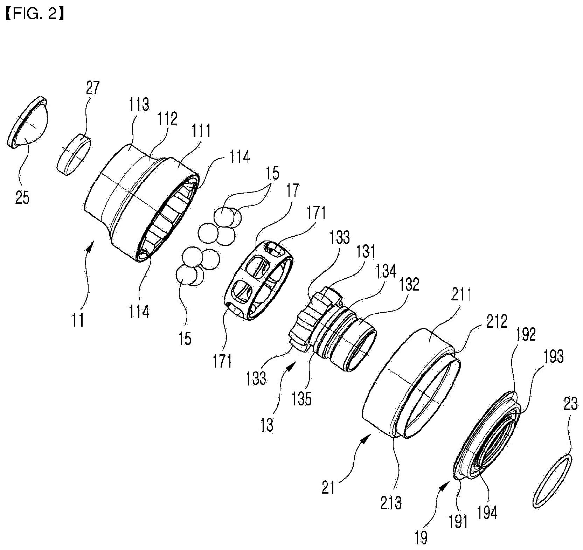

Referring to FIG. 1 to FIG. 3, a constant velocity joint 10 includes an outer race 11 and an inner race 13 configured to be respectively connected to separate power transmission elements. A ball 15 acts as a medium for transmitting torque and is placed between the outer race 11 and the inner race 13 in a state of being accommodated in a pocket 171 of a ball cage 17. The ball 15 may be provided in a plurality, and the outer race 11 and the inner race 13 may each have outer ball grooves 114 and inner ball grooves 133 that pair up to form spaces that accommodate each ball 15. Rotational power transmission between the outer race 11 and the inner race 13 takes place through the ball 15 placed in the space formed by the outer ball grooves 114 and the inner ball grooves 133. FIG. 2 exemplarily shows a case where eight balls 15 are provided, but the number of balls 15 is not limited to this and can vary, such as six, ten, etc.

The outer race 11 may include a power transmission part 111 with outer ball grooves 114 formed on an inner surface thereof, a connecting part 113 configured to be connected to a power transmission shaft(not shown), and a connection part 112 connecting the power transmission part 111 and the connecting part 113. The outer race 11 may form a through-hole 118 that extends along the axial direction X1 to penetrate the power transmission part 111, the connection part 112, and the connecting part 113. The inner race 13 may include a power transmission part 131 with inner ball grooves 133 formed on an outer surface thereof and a shaft part 132 extending in an axial direction X2 from the power transmission part 131. The inner race 13 may form a through-hole 138 extending along an axial direction X2 to penetrate the power transmission part 131 and the shaft part 132. For example, when a constant velocity joint according to an embodiment of the present invention is installed between a differential gear and a propeller shaft, the inner race 13 can be coupled to an output shaft of the differential gear inserted into the through-hole 138 via spline coupling, and the connecting part 113 of the outer race 11 can be coupled to a hollow shaft of the propeller shaft via welding.

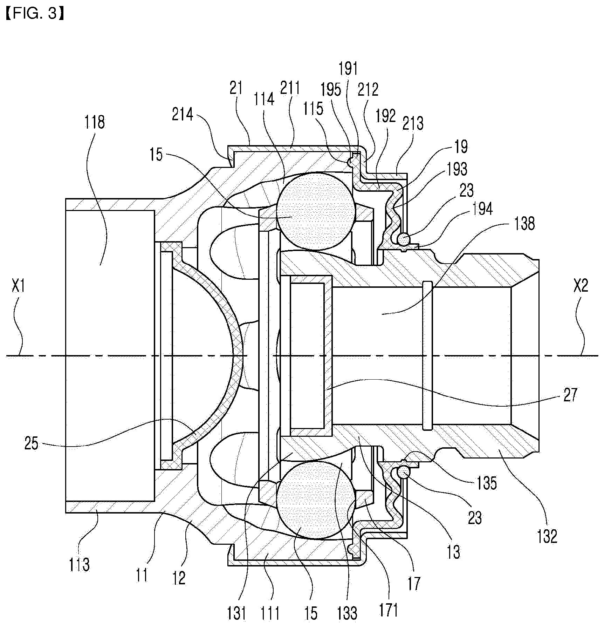

The outer race 11 and the inner race 13 may be configured to rotate for power transmission while being angularly displaced from each other. In FIG. 3, the longitudinal axes X1 and X2 of the outer race 11 and inner race 13 are shown in a non-angularly displaced state where they are coaxial. In an angularly displaced state, the relative positions of the outer race 11 and the inner race 13 change, so the two longitudinal axes X1 and X2 are not aligned parallel to each other. The constant velocity joint according to an embodiment of the present invention is designed to allow the outer race 11 and the inner race 13 to rotate while being angularly displaced within a predetermined angular range.

Although not shown in the drawings, grease is filled in a space where the ball 15 and the ball cage 17 are located for lubrication. Referring to FIG. 2 and FIG. 3, to prevent the leakage of grease through the through-hole 118 of the outer race 11 and the through-hole 138 of the inner race 13, grease retainers 25 and 27 that can block these through-holes 118 and 138 can be coupled to the outer race 11 and the inner race 13 respectively.

The grease sealing structure 20 provides grease sealing between the outer race 11 and the inner race 13. The grease sealing structure 20 may include a boot 19, a clamping cap 21, and a sealing ring 23. The boot 19 is closely fitted to both the outer race 11 and the inner race 13 to prevent grease, which fills the space where the ball 15 and ball cage 17 are located, from leaking through a space between the outer race 11 and the inner race 13. The boot 19 can be tightly fitted to the outer race 11 by being pressed by the clamping cap 21 and to the inner race 13 by being pressed by the sealing ring 23.

The boot 19 may include a first fixing part 191 for fastening to the outer race 11, a second fixing part 194 for fastening to the inner race 13, and connecting parts 192 and 193 linking the first fixing part 191 and the second fixing part 194. The boot 19 may be made of a material capable of elastic deformation, such as rubber. The connecting parts 192 and 193 may be configured to allow shape deformation during operation in an angularly displaced state. The first fixing part 191 may be configured to be closely fitted to an axial support surface 116 provided at an axial end X1 of the outer race 11, and the second fixing part 194 may be configured to be closely fitted to a radial support surface 134 provided on a radial outer surface of the inner race 13.

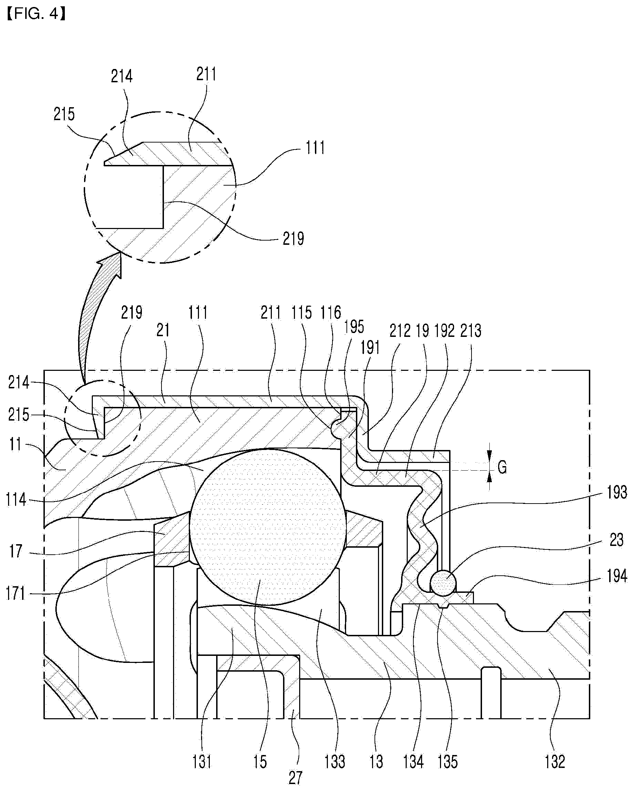

In one embodiment of the present invention, as shown in FIG. 3 and FIG. 4, the first fixing part 191 may extend approximately perpendicular to an axial direction X1 of the outer race 11, and the second fixing part 194 may extend approximately parallel to an axial direction X2 of the inner race 13. In an embodiment of the present invention, as shown in FIG. 3 and FIG. 4, the connecting part may include two sections, namely an axial extension part 192 that extends approximately parallel to the axial direction X2 of the inner race 13 from an inner end of the first fixing part 191, and a corrugated section 193 that has a corrugated shape to connect one end of the axial extension part 192 to the second fixing part 194. The corrugated section 193 may have a corrugated shape to extend in a zigzag shape with respect to a radial direction, allowing easy displacement in both the axial direction X2 and the radial direction (vertical direction in FIG. 4).

A clamping cap 21 is configured to be fixed to the outer race 11 and pressurize the first fixing part 191 in the axial direction X1 to be fixedly secured to an axial support surface 116. In more detail, referring to FIG. 4, the clamping cap 21 includes a fastening part, i.e., an axial extension part 211, that is attached to the power transmission part 111 of the outer race 11, and a support part 212 that extends radially inward from one end of the axial extension part 211 to pressurize and clamp the first fixing part 191 in the axial direction X1. The axial extension part 211 has a hollow cylindrical shape and can be press-fitted to the power transmission part 111. In this regard, a movement-limiting part 214 is deformed by caulking to be caught by a catch 219 of the outer race 11 to provide a fastening force in the axial direction X1. For example, the movement-limiting part 214 can be press-fitted to the outer race 11 in a state extending parallel to the axial extension part 211 as shown inside a dotted circle of FIG. 4, and after press-fitted, it can be deformed as shown in FIG. 4 by caulking to be fastened to the catch 219 of the outer race 11. In this regard, to make the deformation of the movement-limiting part 214 easier, a slope 215 may be provided on the outer surface of the movement-limiting part 214.

As shown in FIG. 3 and FIG. 4, with the clamping cap 21 fixed to the outer race 11 while being constrained in the axial direction X2 by the axial extension part 211 and the movement-limiting part 214, the support part 212 pressurizes the first fixing part 191 in the axial direction X1. As a result, the first fixing part 191 of the boot 19 is closely adhered to the axial support surface 116 of the power transmission part 111 in a pressurized state in the axial direction X1. Since the first fixing part 191 of the boot 19 is fixed to the axial support surface 116 of the outer race 11 rather than to the radial outer circumference of the outer race 11, the rotation radius can be reduced.

Meanwhile, to enhance the sealing characteristics between the first fixing part 191 and the axial support surface 116, a groove 115 may be formed on the axial support surface 116, and the first fixing part 191 can be provided with a sealing protrusion 195 that inserts into the groove 115. The groove 115 and the sealing protrusion 195 may have a ring shape extending along the circumferential direction of the power transmission part 111 of the outer race 11.

The second fixing part 194 of the boot 19 may be positioned radially inward from the first fixing part 191 and at a certain distance apart axially. By pressing a radial outer surface of the second fixing part 194 with the sealing ring 23, the second fixing part 194 can be pressed against and closely adhere to a radial support surface 134 of the inner race 13. In this regard, to enhance the sealing characteristics between the second fixing part 194 and the radial support surface 134, a groove 135 may be formed in a position corresponding to the location of the sealing ring 23, and a part of the second fixing part 194 can be configured to insert into the groove 135 due to its shape deformation when pressed.

Meanwhile, according to an embodiment of the present invention, an expansion limiting part 213 is provided to restrict expansion in a radial direction (in a vertical direction in FIG. 4) expansion of the axial extension part 192, thereby limiting the radial expansion of the boot 19. As shown in FIG. 4, the expansion limiting part 213 can extend approximately parallel to the axial direction X1 from a radial inner end of the support part 212. The expansion limiting part 213 may have a hollow cylindrical shape that extends in the axial direction X1 while being radially apart outwardly from the outer circumference of the axial extension part 192. By limiting the radial expansion of the boot 19 through the expansion limiting part 213, excessive expansion of the boot 19 can be prevented, and the stress on the boot 19 can be minimized, increasing its durability. Additionally, the expansion limiting part 213 can also serve to protect the radial outer surface of the boot 19 from external contaminants or impacts. The distance between the expansion limiting part 213 of the clamping cap 21 and the axial extension part 192 of the boot 19 may have an appropriate size, and the gap between them can be maintained consistently along the axial direction or can be configured to increase or decrease.

Although the embodiments of the present invention have been described above, the scope of rights of the present invention is not limited thereto, and it encompasses all changes and modifications within the scope of the appended claims.

### [Industrial Applicability]

The present invention relates to a constant velocity joint that can be used in a vehicle's drive mechanism, so it has industrial applicability.

## Claims

1. A grease sealing structure (20) for sealing grease filled between an outer race (11) and an inner race (13) of a constant velocity joint (10), comprising:
a boot (19) formed to be closely fitted and supported on both the outer race (11) and the inner race (13);
a clamping cap (21) configured to be fastened to the outer race (11) so that a movement in an axial direction of the outer race (11) is limited and to press the boot (19) in the axial direction of the outer race (11) to ensure the boot (19) to be tightly fitted to the outer race (11); and
a sealing ring (23) configured to be fastened to the boot (19) to press the boot (19) against an outer circumferential surface of the inner race (13),
wherein the boot (19) comprises a first fixing part (191) configured to be supported on the outer race (11) in the axial direction by the clamping cap (21) to be fastened to the outer race (11), a second fixing part (194) configured to be supported on the inner race (13) in a radial direction by the sealing ring (23) to be fastened to the inner race (13), and a connecting part (193) comprising an axial extension part (192) that extends in a direction parallel to the axial direction of the inner race (13) from a radial inner end of the first fixing part (191) and a corrugated part with a corrugated shape connecting the axial extension part (192) and the second fixing part (194),
wherein the clamping cap (21) comprises a fastening part (211) that is fastened to the outer race (11) so that a movement in the axial direction is restricted, a support part (212) extending radially from one end of the fastening part (211) to press the first fixing part (191) in the axial direction, and an expansion limiting part (213) that extends in the axial direction from an inner end of the support part (212) and is formed to be positioned radially outward from the connecting part (193) of the boot (19), wherein the expansion limiting part (213) is configured to surround an outer side of the axial extension part (192), and
**characterized in that**
the expansion limiting part (213) is configured to be spaced apart from an outer surface of the axial extension part (192) when the outer race (11) and the inner race (13) are in a state of not angularly displaced from each other.

2. The grease sealing structure (20) of claim 1, wherein the clamping cap (21) further comprises a movement limiting part that is bent radially inward from one end of the fastening part (211) to restrict movement in the axial direction.

3. The grease sealing structure (20) of claim 1, wherein the expansion limiting part (213) is configured so that a distance separated from an outer surface of the axial extension part (192) along the axial direction remains constant.

4. The grease sealing structure (20) of claim 1, wherein the expansion limiting part (213) is configured so that the distance separated from the outer surface of the axial extension part (192) along the axial direction gradually increases or decreases.

5. A constant velocity joint (10) comprising:
an outer race (11) forming a plurality of outer ball grooves;
an inner race (13) forming a plurality of inner ball grooves (133) that are respectively paired with the outer ball grooves (114);
a plurality of balls (15) that are respectively positioned in a space formed by the pair of the outer and internal ball grooves (133);
a ball cage (17) accommodating the plurality of balls (15); and
a grease sealing structure (20) according to any of the previous claims.

## Patentansprüche

1. Fettdichtungsstruktur (20) zum Abdichten von zwischen einem Außenring (11) und einem Innenring (13) eines Gleichlaufgelenks (10) eingefülltem Fett, umfassend:
eine Manschette (19), die so ausgebildet ist, dass sie sowohl an dem Außenring (11) als auch an dem Innenring (13) eng anliegt und abgestützt ist;
eine Klemmkappe (21), die so eingerichtet ist, dass sie an dem Außenring (11) befestigt ist, so dass eine Bewegung des Außenrings (11) in einer axialen Richtung begrenzt ist, und die Manschette (19) in der axialen Richtung des Außenrings (11) drückt, um sicherzustellen, dass die Manschette (19) dicht an dem Außenring (11) anliegt; und
einen Dichtungsring (23), der so eingerichtet ist, dass er an der Manschette (19) befestigt ist, um die Manschette (19) gegen eine äußere Umfangsfläche des Innenrings (13) zu drücken,
wobei die Manschette (19) einen ersten Fixierteil (191), der so eingerichtet ist, das er in axialer Richtung durch die an dem Außenring (11) zu befestigende Klemmkappe (21) auf dem Außenring (11) abgestützt ist, einen zweiten Fixierteil (194), der so eingerichtet ist, dass er in einer radialen Richtung durch den an dem Innenring (13) zu befestigenden Dichtungsring (23) auf dem Innenring (13) abgestützt ist, und einen Verbindungsteil (193) umfasst, der einen axialen Verlängerungsteil (192) umfasst, der sich in einer Richtung parallel zu der axialen Richtung des Innenrings (13) von einem radial inneren Ende des ersten Fixierteils (191) erstreckt, und
ein Wellenteil mit einer Wellenform, das den axialen Verlängerungsteil (192) und den zweiten Fixierteil (194) verbindet,
wobei die Klemmkappe (21) einen Befestigungsteil (211) umfasst, der an dem Außenring (11) befestigt ist, so dass eine Bewegung in der axialen Richtung eingeschränkt ist, einen Stützteil (212), der sich radial von einem Ende des Befestigungsteils (211) erstreckt, um den ersten Fixierteil (191) in der axialen Richtung zu drücken, und einen Ausdehnungsbegrenzungsteil (213), der sich in der axialen Richtung von einem inneren Ende des Stützteils (212) erstreckt und so ausgebildet ist, dass er radial außerhalb des Verbindungsteils (193) der Manschette (19) positioniert ist, wobei der Ausdehnungsbegrenzungsteil (213) so eingerichtet ist, dass er eine Außenseite des axialen Verlängerungsteils (192) umgibt, und
**dadurch gekennzeichnet, dass** der Ausdehnungsbegrenzungsteil (213) so eingerichtet ist, dass er von einer Außenfläche des axialen Verlängerungsteils (192) beabstandet ist, wenn der Außenring (11) und der Innenring (13) sich in einem Zustand befinden, in dem sie nicht winklig gegeneinander versetzt sind.

2. Fettdichtungsstruktur (20) nach Anspruch 1, wobei die Klemmkappe (21) ferner einen Bewegungsbegrenzungsteil umfasst, der von einem Ende des Befestigungsteils (211) radial nach innen gebogen ist, um eine Bewegung in der axialen Richtung einzuschränken.

3. Fettdichtungsstruktur (20) nach Anspruch 1, wobei der Ausdehnungsbegrenzungsteil (213) so eingerichtet ist, dass ein Abstand von einer Außenfläche des axialen Verlängerungsteils (192) entlang der axialen Richtung konstant bleibt.

4. Fettdichtungsstruktur (20) nach Anspruch 1, wobei der Ausdehnungsbegrenzungsteil (213) so eingerichtet ist, dass der Abstand von der Außenfläche des axialen Verlängerungsteils (192) entlang der axialen Richtung allmählich zunimmt oder abnimmt.

5. Gleichlaufgelenk (10), umfassend:
einen Außenring (11), der eine Vielzahl äußerer Kugelnuten bildet;
einen Innenring (13), der eine Vielzahl innerer Kugelnuten (133) bildet, die jeweils mit den äußeren Kugelnuten (114) gepaart sind;
eine Vielzahl von Kugeln (15), die jeweils in einem durch das Paar der äußeren und innenliegenden Kugelnuten (133) gebildeten Raum positioniert sind;
einen Kugelkäfig (17), der die Vielzahl von Kugeln (15) aufnimmt; und
eine Fettdichtungsstruktur (20) nach einem der vorstehenden Ansprüche.

## Revendications

1. Structure d'étanchéité à la graisse (20) destinée à assurer l'étanchéité à la graisse remplie entre une bague extérieure (11) et une bague intérieure (13) d'un joint homocinétique (10), comprenant :
un soufflet (19) formé de manière à être ajusté étroitement à la fois sur la bague extérieure (11) et sur la bague intérieure (13), et supporté sur les deux bagues ;
un capot de serrage (21) configuré pour être fixé à la bague extérieure (11) de telle sorte qu'un déplacement dans une direction axiale de la bague extérieure (11) est limité et pour presser le soufflet (19) dans la direction axiale de la bague extérieure (11) afin d'assurer que le soufflet (19) est ajusté de manière étanche à la bague extérieure (11) ; et
une bague d'étanchéité (23) configurée pour être fixée au soufflet (19) pour presser le soufflet (19) contre une surface circonférentielle extérieure de la bague intérieure (13),
dans laquelle le soufflet (19) comprend une première partie de maintien (191) configurée pour être supportée sur la bague extérieure (11) dans la direction axiale par le capot de serrage (21) pour une fixation à la bague extérieure (11), une deuxième partie de maintien (194) configurée pour être supportée sur la bague intérieure (13) dans une direction radiale par la bague d'étanchéité (23) pour une fixation à la bague intérieure (13), et une partie de liaison (193) comprenant une partie d'extension axiale (192) qui s'étend dans une direction parallèle à la direction axiale de la bague intérieure (13) depuis une extrémité radialement intérieure de la première partie de maintien (191), et
une partie ondulée présentant une forme ondulée reliant la partie d'extension axiale (192) et la deuxième partie de maintien (194),
dans laquelle le capot de serrage (21) comprend une partie de fixation (211) qui est fixée à la bague extérieure (11) de telle sorte qu'un déplacement dans la direction axiale est limité, une partie de support (212) s'étendant radialement depuis une extrémité de la partie de fixation (211) pour presser la première partie de maintien (191) dans la direction axiale, et une partie de limitation d'expansion (213) qui s'étend dans la direction axiale depuis une extrémité intérieure de la partie de support (212) et est formée de manière à être positionnée radialement à l'extérieur de la partie de liaison (193) du soufflet (19), la partie de limitation d'expansion (213) étant configurée pour entourer un côté extérieur de la partie d'extension axiale (192), et
**caractérisée en ce que** la partie de limitation d'expansion (213) est configurée pour être espacée d'une surface extérieure de la partie d'extension axiale (192) lorsque la bague extérieure (11) et la bague intérieure (13) sont dans un état dans lequel elles ne sont pas déplacées angulairement l'une par rapport à l'autre.

2. Structure d'étanchéité à la graisse (20) selon la revendication 1, dans laquelle le capot de serrage (21) comprend en outre une partie de limitation de déplacement qui est courbée radialement vers l'intérieur depuis une extrémité de la partie de fixation (211) pour limiter le déplacement dans la direction axiale.

3. Structure d'étanchéité à la graisse (20) selon la revendication 1, dans laquelle la partie de limitation d'expansion (213) est configurée de telle sorte qu'une distance séparée d'une surface extérieure de la partie d'extension axiale (192) le long de la direction axiale reste constante.

4. Structure d'étanchéité à la graisse (20) selon la revendication 1, dans laquelle la partie de limitation d'expansion (213) est configurée de telle sorte que la distance séparée de la surface extérieure de la partie d'extension axiale (192) le long de la direction axiale augmente ou diminue progressivement.

5. Joint homocinétique (10) comprenant :
une bague extérieure (11) formant une pluralité de gorges de billes extérieures ;
une bague intérieure (13) formant une pluralité de gorges de billes intérieures (133) qui sont appariées respectivement avec les gorges de billes extérieures (114) ;
une pluralité de billes (15) qui sont positionnées respectivement dans un espace formé par la paire de gorges de billes extérieures et intérieures (133) ;
une cage à billes (17) recevant la pluralité de billes (15) ; et
une structure d'étanchéité à la graisse (20) selon l'une des revendications précédentes.
